# EUROPEAN PATENT APPLICATION

(11) **EP 2 416 102 A2**
(43) Date of publication of application: **08.02.2012**
(21) Application number: 10759001.0
(22) Date of filing: 30.03.2010
(51) Int. Cl.: F41H 1/02, B32B 15/14, D06M 17/00

(54) **ARAMID COMPOSITE, AND METHOD FOR PREPARING SAME**

(30) Priority: 30.03.2009 KR 20090026885; 25.06.2009 KR 20090056872; 29.06.2009 KR 20090058420; 30.09.2009 KR 20090092830
(71) Applicant: Kolon Industries, Inc, Kyunggi-do 427-040 (KR)
(72) Inventor: LIM, Jung Seop, Goyang-si Gyeonggi-do 411-310 (KR); LEE, Jae Young, Daegu 706-040 (KR); LEE, Chang Bae, Uiwang-si Gyeonggi-do 437-120 (KR); HAN, In Sik, Daegu 702-756 (KR)
(74) Representative: ter Meer, Nicolaus
(86) International application number: PCT/KR2010/001924
(87) International publication number: WO 2010/114276

(57) **Abstract**

Disclosed are an aramid composite which satisfies bulletproof performance required for the related art, is lightweight and exhibits superior adhesive strength, and a method for producing the same. The aramid composite includes an aramid fabric, an adhesive layer and a metal substrate, wherein at least one of the surface of the aramid fabric and the surface of the metal substrate is modified.

## Description

### Technical Field

The present invention relates to an aramid composite which satisfies bulletproof performance required for the related art, exhibits superior adhesive strength and is lightweight, and a method for producing the same.

### Background Art

Bulletproof products protect humans from bullets or shells, and bulletproof performance thereof greatly depends on the material used therefor.

In particular, bulletproof products used for vehicles require materials of superior bulletproof performance to safely protect humans from great outer danger such as shells.

Accordingly, steel sheets have been commonly used as bulletproof materials in the related art.

However, although a steel sheet exhibits superior bulletproof performance, it causes an increase of the vehicle weight due to its considerably high specific gravity, an increase of the risk due to the considerable decrease in mobility, and a difficulty of efficient operation due to the consumption of the large amount of fuel.

Meanwhile, bulletproof products using high-strength plastics or high-strength fibers are considerably lightweight, but have lower bulletproof performance than steel sheets and cannot sufficiently protect humans from outer danger.

Accordingly, in order to reduce the weight of bulletproof products, a heterogeneous composite in which the front surface thereof is made of a metal substrate such as a steel sheet and the rear surface thereof is made of a fiber-reinforced composite.

However, the heterogeneous composite is composed of materials having different properties, and disadvantageously exhibits considerable deterioration in adhesive strength and thus deterioration in bulletproof performance when exposed to an exterior environment for a long period of time or physical shock is applied thereto.

Accordingly, physical and chemical treatment of the surface of the metal substrate in order to improve adhesive strength between the metal substrate and the fiber-reinforced composite has been suggested. However, this conventional method has a limitation in improving adhesive strength between the heterogeneous materials having different properties.

### Disclosure

### Technical Problem

Therefore, the present invention has been made in view of the above problems, and it is one object of the present invention to provide an aramid composite which satisfies bulletproof performance required for the related art, exhibits superior adhesive strength and is lightweight, and a method for producing the same.

### Technical Solution

In accordance with an aspect of the present invention, the above and other objects can be accomplished by the provision of an aramid composite including an aramid fabric, an adhesive layer, and a metal substrate, wherein at least one of a surface of the aramid fabric and a surface of the steel sheet is modified.

In accordance with another aspect of the present invention, provided is a method for producing an aramid composite, including: preparing an aramid fabric; preparing a metal substrate; modifying at least one of a surface of the aramid fabric and a surface of the steel sheet; and adhering the aramid fabric to the metal substrate.

### Advantageous Effects

The present invention provides the following effects.

First, the aramid composite of the present invention has superior bulletproof performance required for the related art.

Second, the aramid composite of the present invention has superior lightness based on an optimal combination of an aramid fabric and a metal substrate.

Third, the aramid composite of the present invention has superior adhesive strength through modification of the surface of the aramid fabric or the metal substrate.

As such, the aramid composite having superior bulletproof performance, lightness and adhesive strength may be applied to a variety of bulletproof products.

### Description of Drawings

The above and other objects, features and other advantages of the present invention will be more clearly understood from the following detailed description taken in conjunction with the accompanying drawings, in which:

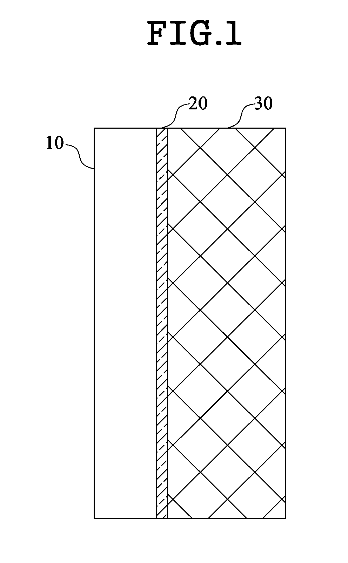

FIG. 1 is a schematic sectional view illustrating an aramid composite according to an embodiment of the present invention.

### Best Mode

The substitutions and modifications within technical spirit and scope of present invention will be apparent to those skilled in the art. Accordingly, the present invention includes modifications and substitutions which fall within the scope of inventions defined as claims and equivalents thereof.

The term "aramid fabric" as used herein broadly means an article in which aramid fibers are entangled with one another and examples thereof include woven fabrics, knitted fabrics, non-woven fabrics and the like. The aramid fabric also includes an aramid prepreg in which a polymeric resin is impregnated in a woven fabric and an aramid laminate in which a plurality of aramid prepregs are laminated.

The term "aramid fiber" as used herein broadly means a fiber prepared from an aramid polymer and examples thereof include an aramid filament and an aramid spun yarn.

The term "aramid prepreg" as used herein means a molded article in which an incompletely cured resin is impregnated in an aramid fabric or the like.

Hereinafter, the aramid composite and the method for producing the same according to the present invention will be described in detail with reference to the annexed drawings.

FIG. 1 is a schematic sectional view illustrating an aramid composite according to an embodiment of the present invention.

As shown in FIG. 1, the aramid composite of the present invention includes an aramid fabric 30, an adhesive layer 20 and a metal substrate 10.

The aramid fabric 30 contains an aramid fiber and a resin. The aramid fabric 30 may optionally contain a coupling agent to improve adhesive strength.

As defined above, the aramid fiber may be a filament, spun yarn or the like. It is desirable to use an aramid filament in terms of superior bulletproof performance.

The aramid filament may have a total fineness of 500 to 4,000 denier considering the bulletproof performance, production efficiency and economic efficiency.

In addition, the aramid filament may have a tensile strength of 20 g/d or more to satisfy the bulletproof performance required for the related art.

The resin may be a thermoplastic or thermosetting resin and is preferably a thermosetting resin with superior impregnation property.

The thermosetting resin may be an epoxy resin, a vinyl ester resin, a phenol resin, a cyanate resin or the like. A phenol or epoxy resin which has a low contraction rate and exhibits superior processability in a curing process may be used. In particular, a phenol resin with superior flame retardancy and impact resistance may be used.

The phenol resin may be present in an amount of 10 to 30% by weight, with respect to the amount of the aramid fabric 30 considering the adhesive strength, lightness and bulletproof performance.

As defined above, the aramid fabric 30 may be selected from a variety of fabrics such as woven fabrics, knitted fabrics, unidirectional sheets and non-woven fabrics. Aramid woven fabrics may be used in order to obtain superior bulletproof performance.

The aramid fabric 30 may be an aramid laminate in which a plurality of aramid prepregs are laminated and cured. The aramid laminate may be a laminate including 15 to 45 aramid prepregs taking into consideration the bulletproof performance, lightness and economic efficiency.

The adhesive layer 20 may comprise polyvinyl alcohol (PVA) or polysulfide. The aramid composite prepared from a polyvinyl alcohol or polysulfide adhesive exhibits superior adhesive strength since the polyvinyl alcohol or polysulfide adhesive has the good affinity with both the metal substrate 10 and the aramid fabric 30.

The adhesive layer 20 may comprise a coupling agent and the coupling agent further improves adhesive strength between the metal substrate 10 and the aramid fabric 30. The coupling agent may comprise a silane, titanium or zirconium coupling agent.

The metal substrate 10 comprises at least one of iron, aluminum, titanium and magnesium. The metal substrate 10 mainly composed of iron has an advantage of superior bulletproof performance due to high strength. The metal substrate 10 mainly composed of aluminum is light and thus may be used in the fields requiring light weight. The metal substrate 10 composed of titanium, although expensive, may be used in the specific field such as armored vehicles due to its superior strength.

At least one of the surface of the aramid fabric 30 and the surface of the metal substrate 10 of the present invention is modified. That is, at least one of the surfaces of the aramid fabric 30 and metal substrate 10 is in the activated state.

The modified surface of the aramid fabric 30 or metal substrate 10 may comprise a coupling agent. The coupling agent may be a silane compound represented by Formula 1 below or a metal oxide represented by Formula 2 below.

[Formula 1] Y-(R)ₙ-SiX₃

wherein Y is a functional group selected from a halogen atom, an epoxy group, an amino group, a mercapto group, a vinyl group and an acryloyl group, R is a hydrocarbon group, X is an alkoxy group in which X may be identical with or different from each other, and n is 0 or 1,

[Formula 2] M(OR')ₘ

wherein m is 3 or 4, R' is a linear or branched alkyl group having 1 to 8 carbon atoms, and M is titanium (Ti) or zirconium (Zr).

Since the silane coupling agent represented by Formula 1 has a functional group, it can form a variety of bonds with a contact surface and thus improves adhesive strength between the metal substrate 10 and the aramid fabric 30.

Since the metal oxide coupling agent represented by Formula 2 contains a metal such as titanium or zirconium, adjacent atoms are readily charged and the bonding force between the metal substrate 10 and the aramid fabric 30 and adhesive strength therebetween can thus be improved.

The modified surface of the aramid fabric 30 may have an oxygen content of 105 to 155%, with respect to the surface of the unmodified aramid fabric 30.

When the surface of the aramid fabric 30 is modified through a plasma treatment using oxygen as a reaction gas, as plasma processing time increases, the content of oxygen on the surface of the aramid fabric 30 gradually increases and content of carbon thereon gradually decreases. That is, as the plasma processing time increases, the amount of a hydroxyl group (-OH) and an ester group (-COO-) present on the surface of the aramid fabric 30 increases. This phenomenon is caused by hydrolysis of the amide bond of the aramid fabric or hydroxylation of the benzene ring. The adhesive strength between the aramid fabric 30 having a plurality of hydroxyl and ester groups on the surface and the resin is greatly improved.

When the oxygen content is lower than 105%, satisfactory adhesive strength cannot be obtained. On the other hand, when the oxygen content is higher than 155%, the aramid fabric 30 is damaged and physical properties are thus deteriorated.

A contact angle of the surface of the modified aramid fabric 30 with respect to water may be 35 to 78°(degrees).

Generally, a contact angle is defined as an angle between the surface of a liquid and the surface of a solid at the time the thermodynamic equilibrium between the liquid surface and the solid surface occurs. As the contact angle increase, surface energy decreases, and as the content angle decreases, surface energy increases. For example, when the surface of an aramid prepreg is modified by plasma processing, as plasma processing time increases, contact angle of the surface of aramid prepreg decreases. This is because a plurality of active functional groups on the surface of the aramid prepreg are formed, which leads to an increase in surface energy and thus adhesive strength of the aramid prepreg.

When the contact angle is greater than 78°, any improvement in adhesive strength cannot be obtained. On the other hand, when the contact angle is lower than 35°, physical properties of the aramid fabric 30 may be deteriorated due to the excessive surface modification.

The aramid composite of the present invention including the aramid fabric 30 and the metal substrate 10 at least one of which has a modified surface may have an adhesive strength (measured by peel test) between the metal substrate 10 and the aramid fabric 30 of 2.6 kgf/5cm or more.

Meanwhile, the aramid composite prepared from the aramid fabric 30 and metal substrate 10 at least one of which has a compositely modified surface may have the adhesive strength (measured by peel test) between the metal substrate 10 and the aramid fabric 30 of 3.0 kgf/5cm or more.

The aramid composite having a steel sheet as the metal substrate 10 can satisfy the V50 requirements in accordance with the military standard 662F using M80 having a bullet diameter of 7.62 mm, based on NIJ standard 3 grade.

Next, a method for producing an aramid composite according to an embodiment of the present invention will be described in detail.

First, an aramid fabric 30, an element of the aramid composite, is prepared. The aramid fabric 30 may be selected from a variety of fabrics as mentioned above and may be an aramid woven fabric taking into consideration superior bulletproof performance and economic efficiency. In addition, the aramid fabric 30 may contain an impregnated resin and may have a laminate structure including a plurality of layers.

The laminate-type aramid fabric 30 may be produced by impregnating a resin in an aramid woven fabric or the like through a dipping process, semi-curing the resin to prepare an aramid prepreg, laminating an appropriate number of the aramid prepregs, and then curing the laminate at a high pressure.

Then, a metal substrate 10, another element of the aramid composite, is prepared. The metal substrate 10 may be subjected to pre-treatment including washing with acid to remove foreign materials therefrom.

Then, at least one of the surface of the aramid fabric 30 and the surface of the metal substrate 10 is modified. Such modification may be carried out using a variety of methods.

The surface of the aramid fabric 30 or metal substrate 10 may be modified by treatment with the coupling agent. The coupling agent treatment may be carried out by applying a coupling agent through dipping, spraying or coating, followed by drying and thermal treatment. The coupling agent may be a silane compound or titanium-based metal oxide, as mentioned above.

In addition, the surface of the aramid fabric 30 or metal substrate 10 may be modified by friction treatment. The friction treatment process may be carried out by sand papering, sand blasting, metal blushing or shot blasting.

In addition, the surface of the aramid fabric 30 or the metal substrate 10 may be modified by plasma processing. When the surface of the aramid fabric 30 is treated with oxygen used as a reaction gas at the time of the plasma processing, a great amount of oxygen reactive groups may be formed on the surface of the aramid fabric 30, and the oxygen reactive groups having high affinity can greatly improve the adhesive strength.

The plasma processing may be carried out under a nitrogen atmosphere at a reduced pressure and at a power of 100 to 3,000 watt over an irradiation time of 5 to 30 minutes. When the power is excessively low or the irradiation time is excessively short, only a small amount of the reactive groups can be produced. On the other hand, when the power is excessively high or the irradiation time is excessively long, the aramid fabric 30 may be damaged. Meanwhile, plasma processing may be performed under a nitrogen atmosphere in order to prevent decrease of the reactive groups formed on the surface of the aramid fabric 30 after plasma processing and plasma processing may be performed under a reduced pressure to prevent introduction of moisture.

In addition, the surface of one of the aramid fabric 30 and the metal substrate 10 may be modified by corona discharge or firing. That is, the surface of the aramid fabric 30 or the metal substrate 10 may be activated using corona discharged light source or flames. In particular, a number of carboxyl groups, amine groups, hydroxyl groups or the like are formed on the surface of the activated aramid fabric 30, thus greatly increasing the adhesive strength.

The corona discharge process may be carried out by applying a high alternating voltage between two electrodes at room temperature and room pressure to induce corona discharge, disposing a sample between the two electrodes, and performing a treatment of the surface of the sample with the corona discharge at a voltage of 1,000 to 50,000 V for an irradiation time of 1 to 60 minutes.

The firing process may be carried out by injecting a mixed gas of the natural gas and the air through a flame nozzle to obtain flames and flaming the surface of the sample at a sample distance of 1 to 10 mm for a treatment time of 0.1 to 30 minutes.

Then, the metal substrate 10 and the aramid fabric 30 the surface of at least one of which is modified are adhered to each other with a polysulfide or polyvinyl alcohol adhesive.

The adhesion of the aramid fabric 30 to the metal substrate 10 may be carried out by inserting an adhesive between the metal substrate 10 and the aramid fabric 30 and applying a pressure of more than 800 psi thereto.

Now, the present invention will be described in more detail with reference to the following Examples. These examples are only provided to illustrate the present invention and should not be construed as limiting the scope and spirit of the present invention.

### 1) Surface-modification by friction treatment

### Example 1

Para-phenylenediamine as an aromatic diamine and terephthaloyl dichloride as an aromatic diacidchloride were polymerized in N-methyl-2-pyrrolidone as a polymerization solvent to prepare a poly-paraphenylene terephthalamide polymer. Then, the polymer was dissolved in a concentrated sulfuric acid solvent to prepare a spinning dope, and the spinning dope was spun through a spinneret and cured to prepare a wholly aromatic aramid filament of 1,000 denier. Then, a plain weaving was performed using the wholly aromatic aramid filaments as warps and wefts to obtain an aramid woven fabric having a density of 450 g/m². Then, a phenol resin was dissolved in a methanol solvent to prepare a composition for impregnation containing 56% by weight of the phenol resin, and the aramid woven fabric was dipped and impregnated with the composition for impregnation and dried to remove the methanol solvent, thereby obtaining an aramid prepreg containing a 20% phenol resin. Then, 28 aramid prepregs were laminated, and then the laminated prepregs were heated and cured at 150°C under a certain pressure to produce an aramid laminate.

Then, the surface of a steel sheet (AR 500) with a thickness of 3.2 mm was rubbed with a sandblast, and the rubbed surface of the steel sheet was washed with acetone to prepare a surface-modified steel sheet.

Then, the surface of the aramid laminate was modified using a sandpaper.

Then, a polysulfide adhesive was applied to the upper portion of the surface-modified aramid laminate and the surface-modified steel sheets were attached thereto, followed by standing at room temperature to obtain an aramid composite.

Bulletproof performance of the aramid composite prepared in Example 1 was measured via the following method. Results thereof are shown in Table 1 below.

### Measurement of bulletproof performance

The bulletproof performance of the aramid composite prepared was measured using M80 rounds having a bullet diameter of 7.62 mm based on NIJ (National Institute of Justice) standard 3-grade. Meanwhile, the bulletproof performance was measured depending on whether the aramid composite satisfied V50 specifications in which a bullet rate is 801±9.1 m/s at a distance of 50m from a gunpoint in accordance with military standard 662F.

**Table 1**

| Property Tested | Ex. 1 |
|---|---|
| Bulletproof performance | Satisfied |

### 2) Surface-modification by treatment of coupling agent

### Example 2

Para-phenylenediamine as an aromatic diamine and terephthaloyl dichloride as an aromatic diacidchloride were polymerized in N-methyl-2-pyrrolidone as a polymerization solvent to prepare a poly-paraphenylene terephthalamide polymer. Then, the polymer was dissolved in a concentrated sulfuric acid solvent to prepare a spinning dope, and the spinning dope was spun through a spinneret to prepare a wholly aromatic aramid filament of 3,000 denier. Then, a plain weaving was performed using the wholly aromatic aramid filaments as warps and wefts to obtain an aramid woven fabric having a density of 450 g/m². Then, a phenol resin was dissolved in a methanol solvent to prepare a composition for impregnation containing 56% by weight of the phenol resin, and the aramid woven fabric was dipped and impregnated with the composition for impregnation and dried to remove the methanol solvent, thereby obtaining an aramid prepreg containing a 20% phenol resin. Then, 28 aramid prepregs were laminated, and then the laminated prepregs were heated and cured at 150°C under a certain pressure to produce an aramid laminate.

Next, a steel sheet with a thickness of 3.2 mm and a surface roughness of 30 um was prepared.

Then, 1% by weight of 3-glycidoxylpropyltrimethoxysilane as a silane coupling agent was added to an aqueous ethanol solution to prepare a coupling agent composition, the steel sheet and the aramid laminate were dipped in the coupling agent composition for 30 minutes, heated at a temperature of 100°C for 24 hours to obtain a surface-modified aramid laminate and a surface-modified steel sheet.

Then, a polysulfide adhesive was applied to the steel sheet, the aramid laminate was disposed thereon, and a pressure of 1,000 psi was applied thereto at a temperature of 50°C for one hour to obtain an aramid composite.

### Comparative Example 1

An aramid composite was prepared in the same manner as in Example 2, except that neither the steel sheet nor the aramid laminate were treated with the coupling agent composition.

### Examples 3 to 8

Aramid composites were prepared in the same manner as in Example 2, except that steel sheets having surface roughnesses of 0.5, 2, 10, 50, 70 and 80 were used respectively.

### Examples 9 to 12

Aramid composites were prepared in the same manner as in Example 2, except that the pressures of 700, 2000, 3000 and 4000 psi were respectively applied for the adhesion of the aramid laminates to the steel sheets.

### Examples 13 to 16

Aramid composites were prepared in the same manner as in Example 2, except that coupling agent compositions containing 0.1, 2.0, 3.0 and 4.0% by weight of the coupling agent were used respectively.

### Example 17

An aramid composite was prepared in the same manner as in Example 2, except that a polyvinyl alcohol film instead of the polysulfide adhesive was used for the adhesion of the aramid laminate to the steel sheet at a temperature of 140°C for one hour.

### Example 18

An aramid composite was prepared in the same manner as in Example 2, except that a titanium ethoxide (Ti(OEt)₄) coupling agent instead of the silane coupling agent was used.

### Example 19

An aramid composite was prepared in the same manner as in Example 2, except that a zirconium ethoxide (Zr(OEt)₄) coupling agent instead of the silane coupling agent was used.

The adhesive strength of aramid composites of Examples 2 to 19 and Comparative Example 1 were measured through the following method. The results thus obtained are shown in Table 2.

### Adhesive strength of aramid composite

An adhesive strength (kgf/5cm) between the steel sheet and the aramid fabric 30 was measured using a peel test in accordance with ASTM D903. At this time, the peel test was carried out at a load cell of 100 kgf and at a rate of 300 mm/min.

**[Table 2]**

| Type | Coupling agent | Adhesive | Surface roughness (um) | Pressure applied for adhesion (psi) | Coupling agent concentration (wt%) | Adhesion strength (kgf/5 cm) |
|---|---|---|---|---|---|---|
| Ex. 2 | Silane | Polysulfide | 30 | 1000 | 1 | 4.6 |
| Comp. Ex. 1 | - | Polysulfide | 30 | 1000 | 0 | 2.1 |
| Ex. 3 | Silane | Polysulfide | 0.5 | 1000 | 1 | 2.8 |
| Ex. 4 | Silane | Polysulfide | 2 | 1000 | 1 | 3.0 |
| Ex. 5 | Silane | Polysulfide | 10 | 1000 | 1 | 3.5 |
| Ex. 6 | Silane | Polysulfide | 50 | 1000 | 1 | 5.1 |
| Ex. 7 | Silane | Polysulfide | 70 | 1000 | 1 | 5.7 |
| Ex. 8 | Silane | Polysulfide | 80 | 1000 | 1 | 3.1 |
| Ex. 9 | Silane | Polysulfide | 30 | 700 | 1 | 2.9 |
| Ex. 10 | Silane | Polysulfide | 30 | 2000 | 1 | 4.8 |
| Ex. 11 | Silane | Polysulfide | 30 | 3000 | 1 | 5.0 |
| Ex. 12 | Silane | Polysulfide | 30 | 4000 | 1 | 5.2 |
| Ex. 13 | Silane | Polysulfide | 30 | 1000 | 0.1 | 2.6 |
| Ex. 14 | Silane | Polysulfide | 30 | 1000 | 2 | 5.0 |
| Ex. 15 | Silane | Polysulfide | 30 | 1000 | 3 | 5.3 |
| Ex. 16 | Silane | Polysulfide | 30 | 1000 | 4 | 5.6 |
| Ex. 17 | Silane | PVA | 30 | 1000 | 1 | 3.2 |
| Ex. 18 | Titanium | Polysulfide | 30 | 1000 | 1 | 5.5 |
| Ex. 19 | Zirconium | Polysulfide | 30 | 1000 | 1 | 5.6 |

### 3) Surface-modification by plasma processing

### Example 20

An aramid woven fabric was obtained in the same manner as in Example 2.

Then, an aramid woven fabric was dipped in a resin composition obtained by dissolving a phenol resin in a methanol solvent and then dried to remove the methanol solvent, thereby obtaining a preliminary aramid prepreg containing a 20% phenol resin.

Then, the preliminary aramid prepreg was subjected to plasma treatment process using oxygen as a reaction gas at a power of 1,500 watts for an irradiation period of 15 minutes to obtain a surface-modified aramid prepreg.

### Comparative Example 2

An aramid prepreg was obtained in the same manner as in Example 20 except that an aramid prepreg which was not subjected to plasma treatment process and was thus not surface-modified was used.

### Examples 21 to 24

Aramid prepregs were obtained in the same manner as in Example 20 except that the irradiation time was changed to 3, 7, 15 and 35 minutes respectively.

### Examples 25 to 29

Aramid prepregs were obtained in the same manner as in Example 20 except that the power was changed to 50, 200, 1000, 2500 and 3500 watts respectively.

With respect to aramid prepregs prepared in Examples 20 to 29 and Comparative Example 2, the contact angle with respect to water, the oxygen content, and the adhesive strength were measured according to the following methods. The results thus obtained are shown in Table 3.

### Measurement of contact angle with respect to water

The contact angle with respect to water (°) which indirectly indicats a surface-modification level of the aramid prepreg was measured via a sessile drop method using a static contact angle meter (Phoenix 300 Co.) equipped with a charge coupled device (CCD). At this time, each sample was measured 5 or more times at a temperature of 20°C and at a relative humidity of 65%, and the measured values were averaged to obtain the contact angle.

### Measurement of oxygen content

Oxygen content (C1) of the surface of the modified aramid prepreg and oxygen content (C2) of the surface of the unmodified aramid prepreg were measured using an x-ray photoelectron spectroscope (XPS). Oxygen content (%) was obtained by applying the measured values to the equation of [C1/C2]×100.

### Measurement of adhesive strength (gf/5cm)

First, two aramid prepregs thus produced were laminated, and then adhered and cured at a pressure of 1,200 psi and at a temperature of 150°C to obtain a sample. An adhesive strength (gf/5cm) of the sample was measured via a peel test under the conditions of a load cell of 1 kgf and a rate of 300 mm/min in accordance with ASTM D903.

**[Table 3]**

| Ex. | Irradiation No. time (min) | Power (watt) | Contact angle (°) | Oxygen content (%) | Adhesion strength (gf/5cm) |
|---|---|---|---|---|---|
| Ex. 20 | 15 | 1500 | 47.1 | 137 | 221 |
| Comp. Ex. 2 | - | - | 80.4 | - | 48 |
| Ex. 21 | 3 | 1500 | 72.5 | 110 | 114 |
| Ex. 22 | 7 | 1500 | 63.4 | 128 | 173 |
| Ex. 23 | 25 | 1500 | 40.7 | 143 | 265 |
| Ex. 24 | 35 | 1500 | 36.2 | 150 | 311 |
| Ex. 25 | 15 | 50 | 76.2 | 106 | 96 |
| Ex. 26 | 15 | 200 | 71.4 | 114 | 121 |
| Ex. 27 | 15 | 1000 | 63.3 | 122 | 117 |
| Ex. 28 | 15 | 2500 | 45.2 | 140 | 213 |
| Ex. 29 | 15 | 3500 | 37.1 | 146 | 297 |

### Example 30

28 aramid prepregs prepared in Example 20 were laminated and cured at a pressure of 1,200 psi and at a temperature of 150°C to produce a preliminary aramid laminate. Then, the preliminary aramid laminate was subjected to the plasma treatment process using oxygen as a reaction gas at a power of 1,500 watt for an irradiation period of 10 minutes to obtain an aramid laminate.

Then, a steel sheet which was treated with a sandblast and had a surface roughness of 30 um and a thickness of 3.2 mm was prepared.

Then, a polysulfide adhesive was applied to the steel sheet, the aramid laminate was disposed thereon, and a pressure of 1,000 psi was applied thereto at a temperature of 50°C for one hour to obtain an aramid composite.

### Comparative Example 3

An aramid composite was prepared in the same manner as in Example 30, except that a preliminary aramid laminate which was not subject to the plasma treatment process was used.

### Example 31

An aramid composite was prepared in the same manner as in Example 30, except that a steel sheet which was subjected to the plasma treatment process using oxygen as a reaction gas at a power of 2,000 watts for an irradiation period of 10 minutes was used.

### Example 32

An aramid composite was prepared in the same manner as in Example 30, except that a preliminary aramid laminate which was not subject to the plasma treatment process was used, and a steel sheet which was plasma-processed using oxygen as a reaction gas at a power of 2,000 watts for an irradiation period of 10 minutes was used.

The adhesive strength of the aramid composites prepared in Examples 30 to 32 and Comparative Example 3 were measured according to the following method. The results thus obtained are shown in Table 4.

### Measurement of adhesive strength of aramid composite (kgf/5cm)

The adhesive strength (kgf/5 ) was measured via a peel test under the conditions of a load cell of 100 kgf and a rate of 300 mm/min in accordance with ASTM D903.

**[Table 4]**

| Ex. No. | Plasma treatment | | Adhesive strength (kgf/5cm) |
|---|---|---|---|
| | Aramid laminate | Steel sheet | |
| Ex. 30 | ○ | X | 5.3 |
| Comp. Ex. 3 | X | X | 2.2 |
| Ex. 31 | ○ | ○ | 7.0 |
| Ex. 32 | X | ○ | 4.7 |

### 4) Surface-modification through corona discharge

### Example 33

An aramid woven fabric was obtained in the same manner as in Example 2.

Then, an aramid woven fabric was dipped in a resin composition obtained by dissolving a phenol resin in a methanol solvent, and then dried to remove the methanol solvent, thereby obtaining a preliminary aramid prepreg containing a 20% phenol resin.

Then, the preliminary aramid prepreg was treated with corona discharge in an air at room temperature, at room pressure, at a voltage of 10,000 V, and at a frequency of 60 Hz for a treatment time of 20 minutes to prepare an aramid prepreg.

### Example 34

An aramid prepreg was obtained in the same manner as in Example 33 except that the preliminary aramid prepreg was treated with fire instead of the corona discharge, using a mixed gas of a natural gas and air (volume ratio=1:1), at a distance of 5 mm from a flame end to the sample for a treatment time of 5 minutes.

### Comparative Example 4

An aramid prepreg was obtained in the same manner as in Example 33 except the preliminary aramid prepreg was regarded as an aramid pregreg without treating the preliminary aramid prepreg with the corona discharge.

The adhesive strength of each of the aramid prepregs prepared in Examples 33 and 34 and Comparative Example 4 was measured. The results thus obtained are shown in Table 5.

### Measurement of adhesive strength of aramid prepreg

Two aramid prepregs thus produced were laminated, and then adhered and cured at a pressure of 1,200 psi and at a temperature of 150°C to obtain a sample. An adhesive strength (gf/5cm) of the sample was measured via a peel test under conditions of a load cell of 1kgf and a rate of 300 mm/min in accordance with ASTM D903.

**[Table 5]**

| Ex. No. | Adhesive strength (gf/5cm) |
|---|---|
| Ex. 33 | 350 |
| Ex. 34 | 320 |
| Comp. Ex. 4 | 150 |

### Example 35

28 aramid prepregs prepared in Example 33 were laminated in such a way that the modified surfaces thereof faced a same direction, and then cured at a pressure of 1,200 psi and at a temperature of 150°C to produce an aramid laminate.

Then, a steel sheet with a thickness of 3.2 mm and a surface roughness of 30 um was prepared.

Then, a polysulfide adhesive was applied to the steel sheet, the aramid laminate was disposed thereon, and a pressure of 1,000 psi was applied thereto at a temperature of 50°C for one hour to obtain an aramid composite.

### Example 36

An aramid composite was prepared in the same manner as in Example 35, except that the aramid prepreg prepared in Example 34 was used.

### Example 37

15 of the preliminary aramid prepregs prepared according to Example 33 which had not been surface-modified were laminated, molded at a pressure of 1,200 psi and at a temperature of 150°C to produce a preliminary aramid laminate. Then, the surface of the preliminary aramid laminate was treated with corona discharge under the same conditions as in Example 33 to produce an aramid laminate. Then, an aramid composite was prepared in the same manner as in Example 35, except that the aramid laminate as above was used.

### Example 38

An aramid composite was obtained in the same manner as in Example 37 except that the surface of the preliminary aramid laminate was treated with fire under the same conditions as in Example 34, instead of the corona discharge.

### Example 39

An aramid composite was obtained in the same manner as in Example 35 except that the steel sheet which was treated with corona discharge under the same conditions as in Example 33 was used.

### Example 40

An aramid composite was obtained in the same manner as in Example 35 except that the steel sheet treated with fire under the same conditions as in Example 34 was used.

### Comparative Example 5

An aramid composite was obtained in the same manner as in Example 35 except that the non-surface-modified preliminary aramid prepreg prepared in Comparative Example 4 was used.

The adhesive strength of each of the aramid composites prepared in Examples 35 to 40 and Comparative Example 5 was measured. The results thus obtained are shown in Table 6.

### Measurement of adhesive strength of aramid composite (kgf/5cm)

An adhesive strength (gf/5 cm) between the steel sheet and the aramid laminate was measured via a peel test under the conditions of a load cell of 1 kgf and a rate of 300 mm/min in accordance with ASTM D903.

**[Table 6]**

| Ex. | Modification of No. aramid pregreg | Modification of aramid laminate | Modification of steel sheet | Adhesive strength (kgf/5cm) |
|---|---|---|---|---|
| Ex. 35 | ○ | X | X | 3.0 |
| Ex. 36 | ○ | X | X | 3.1 |
| Ex. 37 | X | ○ | X | 4.5 |
| Ex.38 | X | ○ | X | 4.3 |
| Ex. 39 | ○ | X | ○ | 3.9 |
| Ex. 40 | ○ | X | ○ | 3.7 |
| Comp. Ex. 5 | X | X | X | 2.0 |

## Claims

1. An aramid composite comprising:
an aramid fabric;
an adhesive layer; and
a steel sheet,
wherein at least one of a surface of the aramid fabric and a surface of the steel sheet is modified.

2. The aramid composite according to claim 1, wherein the at least one of the surface of the aramid fabric and the surface of the steel sheet, which is modified, comprises a coupling agent.

3. The aramid composite according to claim 2, wherein the coupling agent comprises a silane compound represented by Formula 1 or metal oxide represented by Formula 2:
[Formula 1] Y-(R)ₙ-SiX₃
wherein Y is a functional group selected from a halogen atom, an epoxy group, an amino group, a mercapto group, a vinyl group and an acryloyl group, R is a hydrocarbon group, X is an alkoxy group in which X may be identical with or different from each other, and n is 0 or 1,
[Formula 2] M(OR')ₘ
wherein m is 3 or 4, R' is a linear or branched alkyl group having 1 to 8 carbon atoms, and M is Ti or Zr.

4. The aramid composite according to claim 1, wherein the surface of the aramid fabric is modified and has an oxygen content of 105 to 155%, with respect to a surface of an unmodified aramid fabric.

5. The aramid composite according to claim 1, wherein the adhesive layer comprises a polysulfide resin or a polyvinyl alcohol resin.

6. The aramid composite according to claim 1, wherein the aramid fabric is a laminate including 15 to 45 aramid woven fabrics impregnated with a phenol resin of 10 to 30% by weight.

7. The aramid composite according to claim 1, wherein the aramid composite has an adhesive strength between the metal substrate and the aramid fabric of 2.6 kgf/5cm or more, the adhesive strength beign measured via peel test.

8. The aramid composite according to claim 1, wherein the surface of the aramid fabric is modified and has a contact angle of 35 to 78° with respect to water.

9. The aramid composite according to claim 1, wherein the steel sheet has a surface roughness of 1 to 75 .

10. The aramid composite according to claim 1, wherein the aramid composite satisfies V50 requirements in accordance with military standard 662F using M80 having a bullet diameter of 7.62 mm based on NIJ standard 3 grade.

11. The aramid composite according to claim 1, wherein the aramid fabric is a laminate including cured aramid prepregs and each the aramid prepregs has a modified surface.

12. A method for producing an aramid composite, comprising:
preparing an aramid fabric;
preparing a steel sheet;
modifying at least one of a surface of the aramid fabric and a surface of the steel sheet; and
adhering the aramid fabric to the steel sheet.

13. The method according to claim 12, wherein the modifying includes treating at least one of the aramid fabric and the steel sheet with a silane compound represented by Formula 1 or metal oxide represented by Formula 2:
[Formula 1] Y-(R)ₙ-SiX₃
wherein Y is a functional group selected from a halogen atom, an epoxy group, an amino group, a mercapto group, a vinyl group and an acryloyl group, R is a hydrocarbon group, X is an alkoxy group in which X may be identical with or different from each other, and n is 0 or 1,
[Formula 2] M(OR')ₘ
wherein m is 3 or 4, R' is a linear or branched alkyl group having 1 to 8 carbon atoms, and M is Ti or Zr.

14. The method according to claim 12, wherein the modifying includes performing a plasma treatment.

15. The method according to claim 14, wherein the plasma treatment is performed under a nitrogen atmosphere and reduced pressure at a power of 100 to 3,000 watts for an irradiation time of 5 to 30 minutes.

16. The method according to claim 12, wherein the modifying includes performing a corona discharge.

17. The method according to claim 16, wherein the corona discharge is performed at a voltage of 1,000 to 50,000 V for an irradiation time of 1 to 60 minutes.

18. The method according to claim 12, wherein the modifying includes performing a friction treatment.
